# EUROPÄISCHE PATENTANMELDUNG

(11) **EP 1 840 332 A1**
(43) Veröffentlichungstag der Anmeldung: **03.10.2007**
(21) Anmeldenummer: 06006324.5
(22) Anmeldetag: 27.03.2006
(51) Int. Cl.: F01D 5/20, F16J 15/447

(54) **Schaufel einer thermischen Strömungsmaschine sowie thermische Strömungsmaschine**

(71) Anmelder: SIEMENS AKTIENGESELLSCHAFT, 80333 München (DE)
(72) Erfinder: Ahmad, Fathi, 41564 Kaarst (DE); Teteruk, Rostislav, Dr., 45468 Mülheim an der Ruhr (DE)

(57) **Zusammenfassung**

Eine Schaufel (2) einer thermischen Strömungsmaschine, insbesondere eine Laufschaufel, umfasst ein sich in Längsrichtung (4) zwischen einem Schaufelfuß (8) und einer Schaufelspitze (12) erstreckendes profilierten Schaufelblatt (14). Das Schaufelblatt (14) weist eine saugseitige Seitenwand (22) und eine druckseitige Seitenwand (20) auf und ist zur Schaufelspitze (12) hin durch eine Kopfplatte (26) abgeschlossen. Die Schaufel (2) soll bei einfach gehaltener Ausführung und Fertigungsweise einerseits für einen hohen aerodynamischen Wirkungsgrad mit geringen Spaltverlusten ausgelegt sein und andererseits möglichst tolerant und unempfindlich gegenüber Anstreifvorgängen sein. Diese Aufgabe wird erfindungsgemäß dadurch gelöst, dass im Bereich der Schaufelspitze (12) ein in Längsrichtung (4) zumindest teilweise über die Kopfplatte (26) hinaus überstehender saugseitiger Randstreifen (30) und ein druckseitiger Randstreifen (28) vorgesehen ist, wobei die Höhe des jeweiligen Randstreifens (28, 30) über der Kopfplatte (26) entlang dem Umfang der Kopfplatte (26) wellenförmig variiert.

## Beschreibung

Die Erfindung betrifft eine Schaufel einer thermischen Strömungsmaschine, insbesondere eine Laufschaufel, mit einem sich in Längsrichtung zwischen einem Schaufelfuß und einer Schaufelspitze erstreckenden profilierten Schaufelblatt, wobei das Schaufelblatt eine saugseitige Seitenwand und eine druckseitige Seitenwand aufweist und zur Schaufelspitze hin durch eine Kopfplatte abgeschlossen ist. Die Erfindung betrifft weiterhin eine thermische Strömungsmaschine mit einer Anzahl von Schaufeln.

Zu den thermischen Strömungsmaschinen werden Dampf- und Gasturbinen sowie Rotationsverdichter und Strahltriebwerke gezählt. Diese weisen üblicherweise einen von einem fest stehenden Gehäuse umgebenen drehbar gelagerten Rotor auf. Die fest stehenden Baugruppen einer thermischen Strömungsmaschine werden zusammenfassend auch als Stator bezeichnet. Zwischen dem Rotor und dem Stator ist ein in axialer Richtung der Strömungsmaschine verlaufender Strömungskanal für ein kompresibles Strömungsmedium angeordnet. An dem Rotor sind üblicherweise in den Strömungskanal hineinragende und zu Schaufelgruppen oder Schaufelreihen zusammengefasste Laufschaufeln befestigt. Im Falle einer Kraftmaschine, wie etwa einer Dampfturbine, dienen die Laufschaufeln zum Antrieb der Rotorwelle durch Impulsübertrag aus einem heißen und unter Druck stehenden Strömungsmedium, z. B. in Form von Dampf. Die thermische Energie des Strömungsmediums wird also bei dessen Entspannung in mechanische Energie umgewandelt, die beispielsweise zum Antrieb eines elektrischen Generators genutzt werden kann. Im Falle eines zu den Arbeitsmaschinen zählenden Rotationsverdichters wird umgekehrt die Rotorwelle z. B. durch einen Elektro- oder Verbrennungsmotor oder auf andere Weise angetrieben. Die rotorseitig angeordneten Laufschaufeln dienen zur Komprimierung des im Strömungskanal befindlichen Strömungsmediums, das sich bei diesem Vorgang zugleich erwärmt. Es wird also mechanische Energie in thermische Energie des Strömungsmediums umgewandelt. Bei einer Gasturbine sind eine Verdichtereinheit und eine Turbineneinheit auf einer gemeinsamen Welle angeordnet. Der Verdichter, auch Kompressor genannt, saugt kalte Umgebungsluft an, verdichtet sie und führt sie dann einer Brennkammer zu, wo sie zusammen mit einem eingespritzten Brennstoff verbrannt wird. Die heißen Verbrennungsgase strömen schließlich unter hohem Druck und mit hoher Geschwindigkeit in die Turbineneinheit und treiben diese an. Ein Teil der so erzeugten mechanischen Energie wird zum Antrieb des Verdichters genutzt. Der verbleibende Teil steht als nutzbare Energie zur Verfügung. Ein Strahltriebwerk schließlich ist ähnlich aufgebaut wie eine Gasturbine, weist jedoch eine zusätzliche Düse für den austretenden Abgasstrom auf und ist in erster Linie zur Schuberzeugung und nicht zur Erzeugung einer Rotationsbewegung bzw. eines Drehmoments ausgelegt. Sofern im Folgenden von einer Turbine die Rede ist, sollen auch die anderen Typen von thermischen Strömungsmaschinen umfasst sein.

Neben den rotorseitig angebrachten Laufschaufeln kann eine thermische Strömungsmaschine auch noch am Stator angeordnete und in den Strömungskanal hineinragende Leitschaufeln aufweisen. Die Leitschaufeln sind üblicherweise ebenfalls zu Schaufelgruppen oder Schaufelreihen zusammengefasst. Entlang des Strömungsweges sind die Laufschaufelreihen und die Leitschaufelreihen in der Regel alternierend angeordnet. Die Leitschaufeln dienen zur geeigneten Strömungsführung des Strömungsmediums zwischen zwei aufeinanderfolgenden Laufschaufelreihen. Eine aufeinanderfolgende Einheit von einer Laufschaufelreihe und einer Leitschaufelreihe wird auch als Stufe, sprich bei einer Turbine als Turbinenstufe und bei einem Verdichter als Verdichterstufe, bezeichnet. Die gesamte Anordnung der Schaufeln einer Strömungsmaschine bzw. einer Turbine wird auch Beschaufelung genannt.

Der Wirkungsgrad einer thermischen Strömungsmaschine wird insbesondere durch Leckageverluste begrenzt. Derartige Verluste treten beispielsweise auf, wenn das Strömungsmedium von seinem vorgesehenen Strömungsweg im Schaufelpfad abweichend über die Schaufelspitzen der Leitschaufeln oder der Laufschaufeln hinwegströmt. Es sind daher bereits vielfältige Konzepte entwickelt worden, die darauf abzielen, derartige Leckageverluste im Radialspalt zwischen den Schaufelspitzen einer Schaufelreihe und der gegenüberliegenden Turbinenkomponente zu minimieren. Dabei besteht allerdings die Randbedingung, dass gewisse radiale und auch axiale Relativbewegungen von Gehäuse und Rotor gegeneinander, z. B. infolge unterschiedlicher thermischer Ausdehnung, unvermeidlich sind. Bei einem von vornherein besonders klein gehaltenen Spaltabstand besteht daher in ungünstigen Betriebsmomenten, insbesondere bei instationären Vorgängen, wie etwa Lastwechsel und An- oder Abfahrsituationen, die Gefahr des Anstreifens sowie möglicherweise damit einhergehender Sekundärschäden.

Bislang verwirklichte oder angedachte Konzepte zur Bewältigung dieser Problematik sehen beispielsweise eine aktive Spaltregelung vor, bei der der momentane Spaltabstand fortlaufend überwacht wird und anhand der aufgenommenen Messwerte eine gezielte thermische Beaufschlagung relevanter Turbinenkomponenten, etwa der Schaufelträger, zur Steuerung ihres Ausdehnungsverhaltens vorgenommen wird. Die Realisierung derartiger Konzepte ist aber insbesondere in konstruktiver Hinsicht vergleichsweise aufwändig und zudem kaum auf bestehende (Alt-)Anlagen übertragbar.

Weiterhin ist es bekannt, die Schaufelspitzen oder auch die ihnen gegenüberliegenden Turbinenkomponenten an ihrer Oberfläche mit einer geeigneten Beschichtung zu überziehen, die im Falle von Anstreifvorgängen besonders "gutmütig" reagiert, so dass Sekundärschäden in der Regel vermieden werden.

Trotz derartiger Maßnahmen besteht weiterhin ein Bedürfnis nach alternativen verbesserten Konzepten zur Vermeidung oder Verringerung der spaltbedingten Leckageverluste bei gleichzeitig erhöhter Betriebssicherheit.

An dieser Stelle setzt die Erfindung an, deren Aufgabe es ist, eine Schaufel einer thermischen Strömungsmaschine, insbesondere eine Laufschaufel, der eingangs genannten Art anzugeben, die bei einfach gehaltener Ausführung und Fertigung einerseits einen hohen aerodynamischen Wirkungsgrad mit geringen Spaltverlusten ermöglicht und die andererseits möglichst tolerant und unempfindlich gegenüber Anstreifvorgängen ist.

Diese Aufgabe wird erfindungsgemäß dadurch gelöst, dass im Bereich der Schaufelspitze ein in Längsrichtung zumindest teilweise über die Kopfplatte hinaus überstehender saugseitiger Randstreifen und ein druckseitiger Randstreifen vorgesehen ist, wobei die Höhe des jeweiligen Randstreifens über der Kopfplatte entlang dem Umfang der Kopfplatte wellenförmig variiert.

Die Erfindung geht von der Überlegung aus, dass die jeweilige Schaufel zur Erzielung eines hohen aerodynamischen Wirkungsgrades konsequent für die Realisierung eines besonders kleinen Radialspaltes ausgelegt sein sollte, so dass gelegentliche Anstreifvorgänge von vornherein mit einzukalkulieren, beziehungsweise nicht vollkommen auszuschließen sind. Daher sollten einerseits die potenziellen Kontaktflächen besonders klein gehalten sein. Andererseits ist es in aerodynamischer Hinsicht günstig, das bauchige Schaufelprofil auch im Bereich der Schaufelspitze möglichst konsequent beizubehalten. Die unterschiedlichen Auslegungsziele - Minimierung der anstreifgefährdeten Stellen versus wirkungsvolle Unterdrückung der Querströmung über die Schaufelspitzen - werden nach dem nunmehr vorgeschlagenen Konzept besonders vorteilhaft miteinander in Einklang gebracht, indem schmale, über die Kopfplatte hinaus überstehende Randstreifen als Verlängerung der jeweiligen Seitenwand vorgesehen sind, wobei der jeweilige Randstreifen eine wellenförmige, geschwungene Kontur aufweist.

Damit besteht im Bereich der Schaufelspitze eine zur Seite hin von den beiden Randstreifen berandete, nach unten hin durch die im Wesentlichen flache Kopfplatte begrenzte, kraterähnliche Vertiefung. Anstreifgefährdet sind lediglich die "Wellenberge" der in Längsrichtung über die Kopfplatte hinausstehenden Randstreifen. Im Falle eines Anstreifvorganges schleifen sich also nur die relativ dünnwandigen Randstreifen am Ort ihrer höchsten Erhebung ab, wobei zum einen nur relativ geringe Reibungskräfte auftreten, und wobei zum anderen die restlichen Schaufelteile nicht betroffen sind. Zugleich bilden die Randstreifen Drosselstellen für die über die Schaufelspitze hinweg von der Druckseite zur Saugseite des Schaufelblattes übertretende Schaufelspitzenströmung oder Spaltströmung, womit die Strömungsverluste im Spaltbereich gering gehalten sind.

Besonders stark ausgeprägt ist diese Drosselwirkung in dem vorteilhaften Fall, dass der druckseitige und der saugseitige Randstreifen bezüglich ihrer Wellenberge und Wellentäler derart zueinander ausgerichtet sind, dass bei Projektion der Randstreifenkonturen entlang einer senkrecht auf dem Schaufelblatt stehenden Projektionsrichtung die Wellenberge des einen Randstreifens mit den Wellentälern des anderen Randstreifens zusammenfallen. Bei einem seitlichen Blick auf die Turbinenschaufel erscheinen also die Wellenzüge des "vorderen" und des "hinteren" Randstreifens derart gegeneinander verschränkt oder verschoben, dass man an keiner Stelle durch die Randstreifenanordnung hindurchschauen kann. Mithin kann auch das die Strömungsmaschine durchströmende Arbeitsmedium nicht ungehindert, d. h. auf geradlinigem Wege, diesen Bereich passieren, sondern wird im Gegenteil besonders stark blockiert.

Zugleich lässt sich die von den Randstreifen begrenzte Schaufelspitzenregion ausgesprochen effektiv kühlen. Zu diesem Zweck können vorteilhafterweise in der Kopfplatte Austrittsöffnungen für ein durch das Schaufelinnere zuführbares Kühlmedium vorgesehen sein. In besonders bevorzugter Weise sind die Austrittsöffnungen derart gestaltet und ausgerichtet, dass die beiden Randstreifen jeweils an ihrer Innenseite von dem Kühlmedium angeströmt werden, so dass je nach Auslegungsfall das Prinzip der Prallkühlung oder der Filmkühlung realisiert ist.

Besonders stark ausgeprägt ist die oben beschriebene Drosselwirkung für die Spaltströmung, wenn sich der jeweilige Randstreifen zumindest annähernd von der Vorderkante bis zur Hinterkante des Schaufelblattes, das heißt über die gesamte axiale Ausdehnung der Kopfplatte, erstreckt. In weiterer zweckmäßiger Ausgestaltung liegen die beiden Randstreifen in den tiefsten Punkten ihrer Wellentäler höhenmäßig in etwa auf dem Niveau der Kopfplatte und weisen an den höchsten Punkten ihrer Wellenberge in etwa die gleiche Höhe über der Kopfplatte auf.

Der Wellenverlauf ist vorzugsweise ungefähr sinusförmig. Damit ergibt sich ein guter Kompromiss zwischen der angestrebten maximalen Drosselwirkung einerseits und einer klein gehaltenen "Kontaktregion", die auf die unmittelbare örtliche Umgebung der höchsten Erhebungen beschränkt ist, andererseits.

In einer ersten vorteilhaften Variante sind die beiden Randstreifen integrale Bestandteile des Schaufelblatts und bilden eine über die Kopfplatte hinaus überstehende Verlängerung der jeweiligen Seitenwand. Insbesondere können die Seitenwände inklusive der Randstreifen oder auch der gesamte Schaufelkörper einstückig in bewährter Gießtechnik ausgeführt sein.

In einer alternativen zweiten Variante sind die beiden Randstreifen stoffschlüssig mit dem Schaufelblatt oder dem Schaufelkörper verbundene, separat hergestellte Aufsatzteile. Eine dauerhafte, thermisch und mechanisch hoch belastbare Verbindung kann beispielsweise durch Verschweißen oder Löten erreicht werden. Diese zweite Variante hat den Vorteil, dass die Randstreifen zusammen oder einzeln bei Bedarf, etwa infolge fortgeschrittener Verschleißerscheinungen, leicht ausgetauscht und erneuert werden können. Die Randstreifen können insbesondere auch aus einem vom restlichen Schaufelkörper verschiedenen Werkstoff gefertigt sein, der ein besonders vorteilhaftes Anstreifverhalten gewährleistet. Da weiterhin die Randstreifen keine tragende Funktion erfüllen, sind die diesbezüglichen Anforderungen an den Werkstoff geringer als beim restlichen Schaufelkörper.

Das erfindungsgemäße Schaufeldesign kann im Prinzip für alle "freistehenden" Lauf- und/oder Leitschaufeln von thermischen Strömungsmaschinen zur Anwendung kommen, das heißt solche ohne kopfseitige Deckplatten oder Plattformen oder dergleichen zur gegenseitigen Anlage. Besonders bevorzugt handelt es sich bei der Schaufel um eine Gasturbinenlaufschaufel.

Die mit der Erfindung erzielten Vorteile bestehen insbesondere darin, dass die gewellte Ausführung der Schaufelspitzenregion zum einen den Leckagestrom über die Schaufelspitze hinweg minimiert und zum anderen auch bei einer vergleichsweise kleinen Auslegung des verbleibenden Restspaltes zwischen dem jeweiligen Randstreifen und der gegenüberliegenden Turbinenkomponente eine hohe Betriebssicherheit bietet, da die potenziellen Anstreif- oder Kontaktregionen im Bezug auf ihre räumliche Ausdehnung vergleichsweise klein gehalten sind. Die gewellten Randstreifen können bei Bedarf auch vergleichsweise leicht ersetzt werden. Die Kopfplatte der Schaufel wird beim Betrieb geschont und kann zudem mit relativ geringem Kühlmitteleinsatz effektiv gekühlt werden.

Ein Ausführungsbeispiel der Erfindung wird anhand einer Zeichnung näher erläutert. Darin zeigen:
- FIG 1: eine Turbinenschaufel in perspektivischer Ansicht, und
- FIG 2: die Turbinenschaufel gemäß FIG 1 in Seitenansicht.

Gleiche Teile sind in beiden Figuren mit denselben Bezugszeichen versehen.

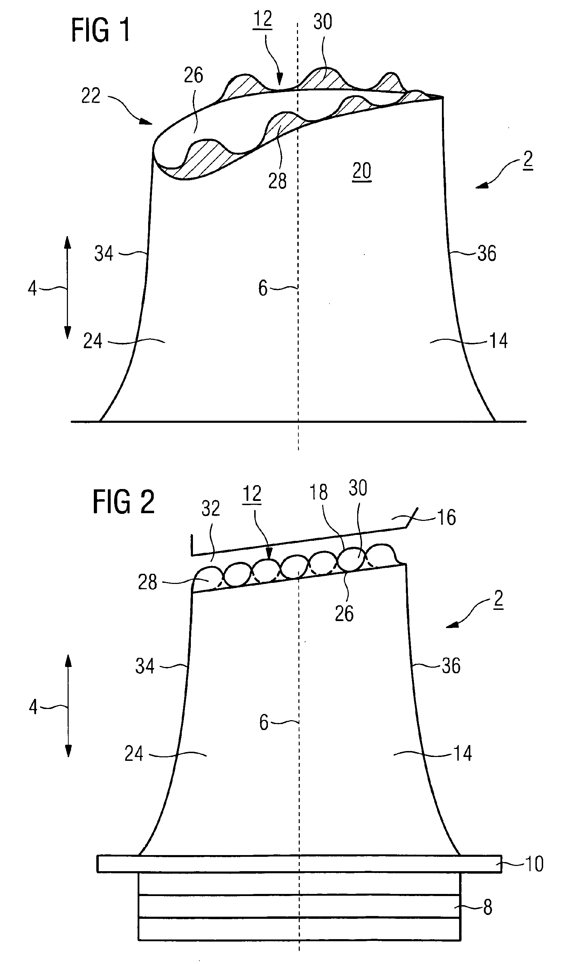

Die in FIG 1 und FIG 2 exemplarisch dargestellte Schaufel 2 ist als Laufschaufel für die Turbineneinheit einer Gasturbine ausgelegt. Die erfindungswesentlichen Merkmale können im Prinzip aber auch bei Leitschaufeln oder Laufschaufeln beliebiger thermischer Strömungsmaschinen verwirklicht sein.

Die Schaufel 2 umfasst ein sich in Längsrichtung 4, das heißt in Richtung der Schaufelachse 6, zwischen einem Schaufelfuß 8 mit einer angeformten Plattform 10 und einer Schaufelspitze 12 erstreckendes profiliertes Schaufelblatt 14. Mit Hilfe des schwalbenschwanzförmigen Schaufelfußes 8 wird die Schaufel 2 in einer korrespondierenden Aufnahmenut eines hier nicht dargestellten Schaufelträgers fixiert. Der Schaufelträger wiederum ist an einer rotierend gelagerten Turbinenwelle (ebenfalls nicht dargestellt) angeordnet. Im eingebauten Zustand der Schaufel 2 fällt die Richtung der Schaufelachse 6 mit der Radialrichtung innerhalb der Turbine zusammen. Die Plattformen 10 aller zu einer Laufschaufelreihe zusammengefassten Laufschaufeln bilden dabei mit ihrer dem jeweiligen Schaufelblatt 10 zugewandten Oberseite die innere Begrenzung eines Heißgas führenden Strömungskanals der Turbine. Die äußere Begrenzung des im Querschnitt ringförmigen Strömungskanals wird durch das in FIG 2 schematisch angedeutete Turbinengehäuse 16 gebildet, welches seinerseits aus diversen Einzelkomponenten, insbesondere aus den Schaufelspitzen 12 der Laufschaufeln gegenüberliegenden Führungsringen, zusammengesetzt sein kann.

Im Betrieb der Gasturbine wird der ringförmige Strömungskanal von einem in einer Brennkammer durch Verbrennung eines fossilen Brennstoffes erzeugten, heißen und unter hohem Druck stehenden Arbeitsmedium durchströmt, wobei sich das Arbeitsmedium arbeitsleistend entspannt und über einen Impulsübertrag auf die Laufschaufeln die Turbinenwelle antreibt. Für einen hohen Wirkungsgrad der Turbine sollten die Randverluste der Strömung im Bereich des Radialspalts 18 zwischen der jeweiligen Schaufelspitze 12 und dem gegenüberliegenden Gehäuse 16 möglichst klein gehalten sein. Bedingt durch zeitlich unterschiedlich verlaufende thermische Ausdehnungsvorgänge und durch die auf die Laufschaufeln 2 einwirkenden Zentrifugalkräfte kann die Größe des Radialspalts 18 während des Betriebs der Turbine variieren, so dass bei zu klein gewähltem Spaltabstand, insbesondere in außergewöhnlichen Betriebssituationen, die Gefahr des Anstreifens, das heißt des vorübergehenden Kontaktes zwischen der jeweiligen Schaufelspitze 12 und dem sich relativ dazu bewegendem Gehäuse 16 besteht. Bei der bislang üblichen Auslegung und Gestaltung der Schaufeln 2 besteht die Gefahr, dass bei derartigen Anstreifvorgängen, insbesondere bei wiederholtem Auftreten, über den Bereich der Schaufelspitze 12 hinaus auf längere Sicht noch weitere Regionen der Schaufel 2 in Mitleidenschaft gezogen werden und somit bleibende strukturelle Beschädigungen auftreten können. Bei konservativer Auslegung hingegen, das heißt bei vergleichsweise groß gewählter Spaltbreite, sind auch die Spaltverluste entsprechend groß und unter dem Gesichtspunkt des erreichbaren Wirkungsgrades nicht akzeptabel.

Die Schaufel 2 weist im Bereich ihrer Schaufelspitze 12 ein neuartiges Design auf, das insofern eine überraschende Lösung dieses Problems bereithält, als mit konstruktiv einfach zu realisierenden Mitteln die Leckageströmung im Spaltbereich drastisch verringert und zugleich die schädigenden Auswirkungen etwaiger Anstreifvorgänge gering gehalten werden.

Dazu sind die druckseitige Seitenwand 20 und die saugseitige Seitenwand 22 des Schaufelblatts 14 in Längsrichtung 4 über die den profilierten Schaufelkörper 24 am freien (schaufelspitzenseitigen) Ende abschließende Kopfplatte 26 hinaus verlängert, so dass die flache Kopfplatte 26 umfänglich von dem auf diese Weise gebildeten, in Längsrichtung 4 überstehenden druckseitigen Randstreifen 28 und dem saugseitigen Randstreifen 30 umrandet ist. Die in Bezug auf das Niveau der Kopfplatte 26 gemessene Höhe des jeweiligen Randstreifens 28,30 variiert in Umfangsrichtung entlang dem Rand des Schaufelblattes 14 in einer annähernd sinusförmigen Weise, so dass Wellentäler mit einer Höhe von etwa null und Wellenberge von jeweils ungefähr gleicher Maximalhöhe ausgebildet sind.

Allgemein ist die maximale Höhe der Wellenberge zweckmäßigerweise jeweils so gewählt, dass die zwischen dem jeweiligen Wellenberg und dem der Schaufel 2 gegenüberliegenden Gehäuse 16 verbleibenden Restspalte 32 alle ungefähr gleich groß sind. Dieses Auslegungsprinzip ist insbesondere auch dann sinnvoll anwendbar, wenn die Kopfplatte 26 gegenüber dem Gehäuse 16 geneigt angeordnet ist, mithin die Höhe der Wellenberge in axialer Richtung zweckmäßigerweise zu- oder abnimmt.

Die beiden Randstreifen 28, 30 bilden auf diese Weise Drosselblenden für die von der Druckseite zur Saugseite hin überströmende Spaltströmung. Der Drosselungseffekt ist im vorliegenden Fall besonders stark ausgeprägt, da die Wellenverläufe der Randstreifen 28, 30, wie in der Seitenansicht gemäß FIG 2 erkennbar ist, derart "gegenphasig" zueinander ausgerichtet sind, dass die infolge der Wellentäler des einen Randstreifens verbleibenden Lücken in der Blendenanordnung in Bezug auf die Richtung der Spaltströmung durch die Wellenberge des anderen Randstreifens verdeckt oder verschlossen werden. Somit kann an keiner Stelle die Spaltströmung ungehindert durchtreten. Zugleich ist die Anzahl und Fläche anstreifgefährdeter Stellen gering gehalten. Durch die über die Kopfplatte 26 hinaus überstehende und zudem vergleichsweise dünnwandige Ausführung der Randstreifen 28, 30 sind die Auswirkungen derartiger Berührungsvorgänge relativ harmlos und lokal auf die "Gipfelregion" der Wellenberge beschränkt.

Weiterhin kann die Schaufel 2 im Bereich der Schaufelspitze 12 vergleichsweise effektiv gekühlt werden. Dazu können in der Kopfplatte 26 hier nicht weiter dargestellte Kühlluftbohrungen vorgesehen sein, die über im Schaufelkörper 24 integrierte Kühlluftkanäle mit Kühlluft versorgbar sind.

Im vorliegenden Ausführungsbeispiel weist der druckseitige Randstreifen 28 vier zwischen der abgerundeten Vorderkante 34 und der spitz auslaufenden Hinterkante 36 des Schaufelblatts 14 liegende Wellenberge auf. Der saugseitige Randstreifen 30 weist drei Wellenberge auf, die entsprechend dem oben erläuterten Kriterium der "gegenphasigen" Ausrichtung angeordnet sind. Diese Werte können jedoch je nach Größe und Geometrie der Schaufel 2 sowie je nach Einsatzzweck und den üblicherweise vorliegenden Betriebsbedingungen variieren. Im Allgemeinen ist es vorteilhaft, wenn die Periodenlänge der Wellenkontur etwa 5 bis 15% der Länge der Profilsehne im Bereich der Kopfplatte 26 beträgt, wobei die Länge der Profilsehne in etwa mit der axialen Ausdehnung gleichzusetzen ist.

## Patentansprüche

1. Schaufel (2) einer thermischen Strömungsmaschine, insbesondere Laufschaufel,
mit einem sich in Längsrichtung (4) zwischen einem Schaufelfuß (8) und einer Schaufelspitze (12) erstreckenden profilierten Schaufelblatt (14),
wobei das Schaufelblatt (14) eine saugseitige Seitenwand (22) und eine druckseitige Seitenwand (20) aufweist und zur Schaufelspitze (12) hin durch eine Kopfplatte (26) abgeschlossen ist,
**dadurch gekennzeichnet, dass**
im Bereich der Schaufelspitze (12) ein in Längsrichtung (4) zumindest teilweise über die Kopfplatte (26) hinaus überstehender saugseitiger Randstreifen (30) und ein druckseitiger Randstreifen (28) vorgesehen ist,
wobei die Höhe des jeweiligen Randsteifens (28, 30) über der Kopfplatte (26) entlang dem Umfang der Kopfplatte (26) wellenförmig variiert.

2. Schaufel (2) nach Anspruch 1,
**dadurch gekennzeichnet, dass**
der druckseitige Randstreifen (28) und der saugseitige Randstreifen (30) bezüglich ihrer Wellenberge und Wellentäler derart zueinander ausgerichtet sind,
dass bei Projektion der Randstreifenkonturen entlang einer senkrecht auf dem Schaufelblatt (14) stehenden Projektionsrichtung die Wellenberge des einen Randstreifens (z. B. 28) mit den Wellentälern des anderen Randstreifens (z. B. 30) zusammenfallen.

3. Schaufel (2) nach Anspruch 1 oder 2,
**dadurch gekennzeichnet, dass**
sich der jeweilige Randstreifen (28, 30) zumindest annähernd von der Vorderkante (34) bis zur Hinterkante (36) des Schaufelblatts (14) erstreckt.

4. Schaufel (2) nach einem der Ansprüche 1 bis 3,
**dadurch gekennzeichnet, dass**
die beiden Randstreifen (28, 30) in den tiefsten Punkten ihrer Wellentäler höhenmäßig auf dem Niveau der Kopfplatte (26) liegen.

5. Schaufel (2) nach einem der Ansprüche 1 bis 4,
**dadurch gekennzeichnet, dass**
die beiden Randstreifen (28, 30) ungefähr die gleiche maximale Höhe über der Kopfplatte (26) aufweisen.

6. Schaufel (2) nach einem der Ansprüche 1 bis 5,
**dadurch gekennzeichnet, dass**
der Wellenverlauf ungefähr sinusförmig ist.

7. Schaufel (2) nach einem der Ansprüche 1 bis 6,
**dadurch gekennzeichnet, dass**
die Periodenlänge des jeweiligen Wellenzuges etwa 5 bis 15 Prozent der Länge der Profilsehne im Bereich der Kopfplatte (26) beträgt.

8. Schaufel (2) nach einem der Ansprüche 1 bis 7,
**dadurch gekennzeichnet, dass**
die Dicke des jeweiligen Randstreifens (28, 30) wesentlich geringer ist als die im Bereich der Kopfplatte (26) vorliegende Profildicke des Schaufelblatts (14).

9. Schaufel (2) nach einem der Ansprüche 1 bis 8,
**dadurch gekennzeichnet, dass**
die Außenseite des jeweilige Randstreifens (28, 30) versatzfrei in die Außenseite der angrenzenden Seitenwand (20, 22) übergeht.

10. Schaufel (2) nach einem der Ansprüche 1 bis 9,
**dadurch gekennzeichnet, dass**
die beiden Randstreifen (28, 30) integrale Bestandteile des jeweiligen Schaufelblatts (14) sind.

11. Schaufel (2) nach einem der Ansprüche 1 bis 9,
**dadurch gekennzeichnet, dass**
die beiden Randstreifen (28, 30) formschlüssig mit dem Schaufelblatt (14) verbundene, separate Aufsatzteile sind.

12. Thermische Strömungsmaschine,
insbesondere Gasturbine,
mit einer Anzahl von Turbinen- oder Verdichterschaufeln nach einem der Ansprüche 1 bis 11.
